(19) Europäisches Patentamt
European Patent Office
Office européen des brevets

(11) **EP 1 797 635 B1**

(12) **EUROPÄISCHE PATENTSCHRIFT**

(45) Veröffentlichungstag und Bekanntmachung des Hinweises auf die Patenterteilung:
**10.06.2009  Patentblatt 2009/24**

(21) Anmeldenummer: **04804606.4**

(22) Anmeldetag: **30.11.2004**

(51) Int Cl.:
*H02P 7/14* (2006.01)        *H02P 7/288* (2006.01)

(86) Internationale Anmeldenummer:
**PCT/EP2004/053164**

(87) Internationale Veröffentlichungsnummer:
**WO 2006/034733 (06.04.2006 Gazette 2006/14)**

(54) **VORRICHTUNG ZUR STUFENWEISEN ANSTEUERUNG EINES GLEICHSTROMMOTORS FÜR EIN KÜHLGEBLÄSE EINES KRAFTFAHRZEUGS**

DEVICE FOR THE INCREMENTAL CONTROL OF A DIRECT-CURRENT MOTOR FOR THE COOLING FAN OF A MOTOR VEHICLE

DISPOSITIF POUR COMMANDER PAR NIVEAUX UN MOTEUR A COURANT CONTINU DESTINE A UN VENTILATEUR DE REFROIDISSEMENT D'UN VEHICULE AUTOMOBILE

(84) Benannte Vertragsstaaten:
**DE ES FR GB SE**

(30) Priorität: **28.09.2004  DE 102004046900**

(43) Veröffentlichungstag der Anmeldung:
**20.06.2007  Patentblatt 2007/25**

(73) Patentinhaber: **ROBERT BOSCH GMBH**
**70442 Stuttgart (DE)**

(72) Erfinder:
• **VOGT, Richard**
**77731 Willstaett (DE)**
• **EWERT, Andreas**
**77839 Lichtenau (DE)**
• **STRUPP, Michael**
**Cheongwon-Gun 100-0 (KR)**

(56) Entgegenhaltungen:
EP-A- 1 375 326          GB-A- 2 041 677
US-A- 3 638 718          US-A- 4 112 338
US-A1- 2003 091 344

• **PATENT ABSTRACTS OF JAPAN Bd. 010, Nr. 268 (E-436), 12. September 1986 (1986-09-12) & JP 61 092192 A (NISSAN MOTOR CO LTD), 10. Mai 1986 (1986-05-10)**

**Beschreibung**

Stand der Technik

Die Erfindung betrifft eine Vorrichtung zur stufenweisen Ansteuerung zumindest eines ersten Gleichstrommotors für ein Kühlgebläse eines Kraftfahrzeugs nach der Gattung des unabhängigen Anspruchs.

Aus der EP 1 017 158 A2 ist eine Vorrichtung zur Steuerung der Startphase eines Gleichstrommotors für ein Kühlgebläse eines Kraftfahrzeugs bekannt, bei der die Drehzahl des Gleichstrommotors über drei per Relais in Reihe schaltbare Widerstände in vier Stufen variierbar ist. Die Vorrichtung weist zudem einen temperaturabhängigen Schalter zur Ansteuerung des Gleichstrommotors auf.

Weiterhin ist es aus der EP 0 445 015 A1 bekannt, unterschiedliche Drehzahlstufen eines Gleichstrommotors für ein Kühlgebläse durch eine Beschaltung mit mehreren Bürstenpaaren zu erzielen, während gemäß der EP 518 538 A2 eine kontinuierliche Drehzahlverstellung durch eine Ansteuerung mittels pulsweitenmodulierter (PWM) Signale erreicht wird. Ferner ist es aus der EP 1 375 326 A2 bekannt, drei Drehzahlstufen eines Motors durch eine Beschaltung mit zwei Widerstände und zwei Schaltmittel zu erzielen.

Vorteile der Erfindung

Gegenüber dem genannten Stand der Technik weist die erfindungsgemäße Vorrichtung zur stufenweisen Ansteuerung zumindest eines Gleichstrommotors für ein Kühlgebläse eines Kraftfahrzeugs mit einem ersten und einem zweiten strombegrenzenden Bauelement sowie mit einem ersten, einem zweiten und einem dritten Schaltmittel den Vorteil auf, dass die Kühlleistung des Kühlgebläses mit nur zwei strombegrenzenden Bauelementen und drei Schaltmitteln in mindestens vier von Null verschiedenen Stufen variierbar ist. In besonders vorteilhafter Weise sind diesbezüglich das erste und das zweite strombegrenzende Bauelement wahlweise jeweils einzeln oder in einer Reihenschaltung oder in eine Parallelschaltung betreibbar. Dazu erfolgt eine Beschaltung des ersten und des zweiten strombegrenzenden Bauelements durch die drei Schaltmittel derart, dass das erste strombegrenzende Bauelement mittels des ersten Schaltmittels an eine Versorgungsspannung und mittels des zweiten Schaltmittels an einen ersten Kontakt des Gleichstrommotors schaltbar ist, das zweite strombegrenzende Bauelement mittels des dritten Schaltmittels an die Versorgungsspannung und mittels des zweiten Schaltmittels an den ersten Kontakt des Gleichstrommotors schaltbar ist, das erste und das zweite strombegrenzende Bauelement mittels des ersten und des dritten Schaltmittels in einer Parallelschaltung an die Versorgungsspannung und mittels des zweiten Schaltmittels an den ersten Kontakt des Gleichstrommotors schaltbar sind und das erste und das zweite strombegrenzende Bauelement mittels des ersten und des zweiten Schaltmittels in einer Reihenschaltung an die Versorgungsspannung und an den ersten Kontakt des Gleichstrommotors schaltbar sind. Die erfindungsgemäße Vorrichtung bietet damit eine kostengünstige Alternative zu bekannten Vorrichtungen, bei denen mit drei Schaltmitteln und zwei strombegrenzenden Bauelementen lediglich maximal zwei von Null verschiedene Stufen oder - wie in der oben genannten EP 1 017 158 A2 - mit drei Schaltmitteln und drei strombegrenzenden Bauelementen nur maximal drei von Null verschiedene Stufen realisierbar sind. Auch gegenüber einer PWM-Ansteuerung - wie aus der EP 518 538 A2 bekannt - ergibt sich durch die erfindungsgemäße Vorrichtung eine Kostenersparnis aufgrund des entfallenden, teuren PWM-Reglers.

In einer vorteilhaften Ausgestaltung sind das erste und das zweite strombegrenzende Bauelement ein erster Widerstand mit einem ersten Widerstandswert $R_1$ bzw. ein zweiter Widerstand mit einem zweiten Widerstandswert $R_2$. Die beiden Widerstandswerte $R_1$ und $R_2$ sind dabei derart zu dimensionieren, dass ein berechneter erster Quotient

$$Q_1 = \frac{R_1}{R_1 + R_2}$$

in etwa in einem Bereich von 50% bis 100% liegt. Dies ermöglich eine gleichmäßige Abstufung des erwünschten Kühlleistungs- bzw. Drehzahlbereichs, insbesondere für den Kraftfahrzeug-Normalbetrieb. Dabei wird eine gleichmäßige Abstufung erreicht, wenn der erste Quotient $Q_1$ den Wert 62% annimmt. Werden zudem $R_1$ und $R_2$ möglichst groß gewählt, so kann der Einschaltstrom der erfindungsgemäßen Vorrichtung deutlich reduziert werden.

Ein weiterer Aspekt der Erfindung ergibt sich durch die Berücksichtigung eines zweiten Quotienten

$$Q_2 = \frac{R_1 + R_2}{R_m},$$

mit dem der Kühlleistungs- bzw. Drehzahlbereich möglichst weit variiert werden kann, wobei $R_m$ einen Motorwiderstandswert des Gleichstrommotors definiert. Zu diesem Zweck ist es von Vorteil, wenn $Q_2$ in einem Bereich von 1 bis 10 liegt.

In einer alternativen Ausführung kann die erfindungsgemäße Vorrichtung mit geringen Modifikationen auch zur Ansteuerung von zwei Gleichstrommotoren, beispielsweise für ein Doppelkühlgebläse eines Kraftfahrzeugs, verwendet werden. Dazu ist das erste strombegrenzende Bauelement ein Widerstand und das zweite strombegrenzende Bauelement ein zweiter Gleichstrommotor, wobei nun der erste und der zweite Gleichstrommotor wahlweise jeweils einzeln oder in einer Reihenschaltung oder in einer Parallelschaltung betreibbar sind.

Die Beschaltung mittels der drei Schaltmittel erfolgt nun derart, dass ein erster Kontakt des ersten Gleichstrommotors mittels des ersten und des zweiten Schaltmittels über den Widerstand an eine Versorgungsspannung schaltbar ist, der erste Kontakt des ersten Gleichstrommotors mittels des zweiten und des dritten Schaltmittels an einen zweiten Kontakt des ersten Gleichstrommotors schaltbar ist, ein erster Kontakt des zweiten Gleichstrommotors mittels des ersten Schaltmittels über den Widerstand an die Versorgungsspannung und ein zweiter Kontakt des zweiten Gleichstrommotors mittels des dritten Schaltmittels an den zweiten Kontakt des ersten Gleichstrommotors schaltbar ist und der erste und der zweite Gleichstrommotor mittels des zweiten und des dritten Schaltmittels wahlweise in einer Reihen- oder Parallelschaltung schaltbar sind.

Der Aufwand bzw. die Kosten für die erfindungsgemäße Vorrichtung zur stufenweisen Ansteuerung des Doppelkühlgebläses lässt sich weiter reduzieren, wenn der Widerstand nahezu einen Widerstandswert von Null Ohm besitzt. Dies ermöglicht zudem einen Betreib des ersten und/oder des zweiten Gleichstrommotors mit maximalem Drehmoment.

Ein weiterer Vorteil der Erfindung ergibt sich, wenn mindestens einem Gleichstrommotor ein viertes Schaltmittel parallel geschaltet ist, da dieses im Falle seines Schließens ein zügiges Abbremsen des Gleichstrommotors nach Deaktivierung der erfindungsgemäßen Vorrichtung ermöglicht.

Schließlich ist es vorteilhaft, wenn mindestens einem Schaltmittel ein thermisches Schutzelement zugeordnet ist, um eine Beschädigung der Gebläsemotoren durch einen zu hohen Strom zu vermeiden. Dazu kann den Schaltmitteln jeweils das thermische Schutzelement in den Steuerkreisen und/oder in den Lastkreisen vorgeschaltet sein.

Weitere Vorteile der Erfindung ergeben sich durch die in den abhängigen Ansprüchen angegebenen Merkmale sowie aus der Zeichnung und der nachfolgenden Beschreibung.

Zeichnung

Die Erfindung wird im Folgenden anhand der Figuren 1 bis 4 beispielhaft erläutert, wobei gleiche Bezugszeichen in den Figuren auf gleiche Bestandteile mit einer gleichen Funktionsweise hindeuten. Es zeigen

Fig. 1: ein Blockschaltbild eines ersten Ausführungsbeispiels der erfindungsgemäßen Vorrichtung,

Fig. 2: ein Diagramm der Drehzahl- und Kühlleistungskennlinien in Abhängigkeit von den unterschiedlichen Stufen der erfindungsgemäßen Vorrichtung nach dem ersten Ausführungsbeispiel,

Fig. 3: ein Blockschaltbild eines zweiten Ausführungsbeispiels der erfindungsgemäßen Vorrichtung sowie

Fig. 4: Blockschaltbilder einer Bremsschaltung (Fig. 4a) und einer Schutzbeschaltung (Fig. 4b) für die erfindungsgemäße Vorrichtung.

Beschreibung

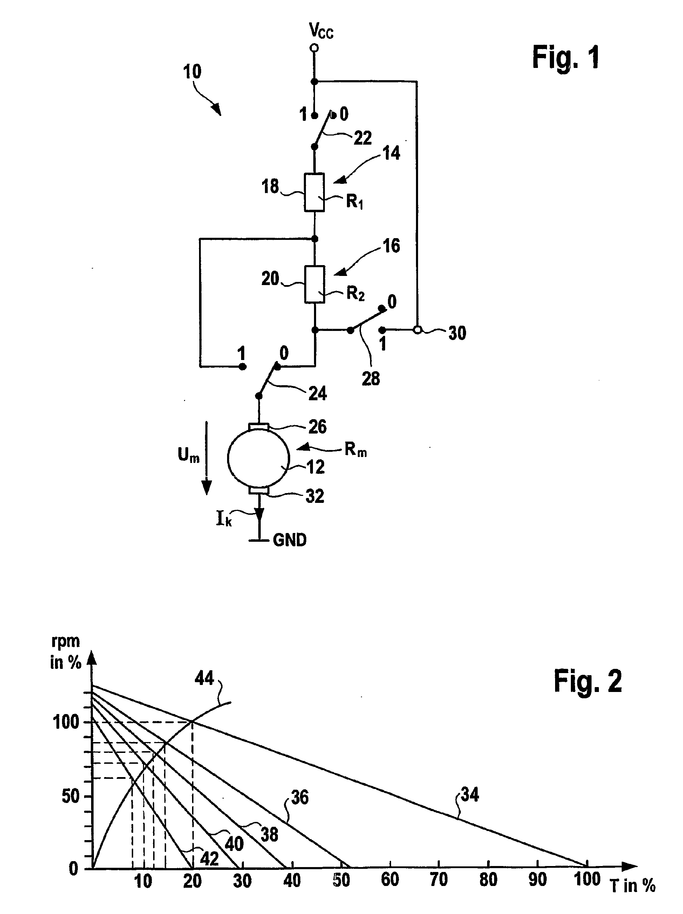

In Figur 1 ist das Blockschaltbild der erfindungsgemäßen Vorrichtung 10 zur stufenweisen Ansteuerung eines Gleichstrommotors 12 für ein Kühlgebläse eines Kraftfahrzeugs dargestellt. Die Vorrichtung 10 weist ein erstes strombegrenzendes Bauelement 14 und ein zweites strombegrenzendes Bauelement 16 auf. Beide Bauelemente 14 und 16 sind als Widerstände 13 und 20 mit einem ersten Widerstandswert $R_1$ bzw. einem zweiten Widerstandswert $R_2$ ausgelegt. Es können aber auch andere strombegrenzende Bauelemente 14 und 16 mit entsprechenden Widerstandswerten zum Einsatz kommen. Dies könnten beispielsweise die Spulen weiterer Gleichstrommotoren, Varistoren, Dioden oder dergleichen sein. Im nachfolgenden, ersten Ausführungsbeispiel soll jedoch von einem ersten und von einem zweiten ohmschen Widerstand 18 bzw. 20 ausgegangen werden.

Der erste Widerstand 18 ist mittels eines ersten Schaltmittels 22, das die beiden Schalterstellungen 0 (offen) und 1 (geschlossen) besitzt, an eine Versorgungsspannung $V_{cc}$ und mittels eines zweiten Schaltmittels 24, das zwischen einer Position 0 und einer weiteren Position 1 umschaltbar ist, an einen ersten Kontakt 26 des Gleichstrommotors 12 schaltbar. Der zweite Widerstand 20 kann mittels eines dritten Schaltmittels 28, das wie das erste Schaltmittel 22 die beiden Schalterstellungen 0 (offen) und 1 (geschlossen) besitzt, über einen Knotenpunkt 30 an die Versorgungsspannung $V_{cc}$ und mittels des zweiten Schaltmittels 24 an den ersten Kontakt 26 des Gleichstrommotors 12 geschaltet werden. Weiterhin ist es möglich, mittels des ersten und des dritten Schaltmittels 22 bzw. 28 den ersten und den zweiten Widerstand 18 und 20 in einer Parallelschaltung an die Versorgungsspannung $V_{cc}$ und mittels des zweiten Schaltmittels 24 an den ersten Kontakt 26 des Gleichstrommotors 12 zu schalten. Schließlich können der erste und der zweite Widerstand 18 und 20 mittels des ersten und des zweiten Schaltmittels 22 bzw. 24 in einer Reihenschaltung an die Versorgungsspannung $V_{cc}$ und an den ersten Kontakt 24 des Gleichstrommotors 12 geschaltet werden.

Gemäß Figur 1 ist ein zweiter Kontakt 32 des Gleichstrommotors 12 mit einer elektrischen Masse GND verbunden. Der Gleichstrommotor 12 weist zudem einen Motorwiderstandswert $R_m$ auf, der sich ohne externe Widerstandsbeschaltung aus einer über dem Gleichstrommotor 12 abfallenden Motorspannung Um und einem Kurzschlussstrom $I_k$ nach der Gleichung $R_m = U_m / I_k$ ergibt.

Gemäß Tabelle 1 lassen sich nun mit den beiden Widerständen 18 und 20, die die Widerstandswerte $R_1$ bzw. $R_2$ aufweisen, und den drei Schaltmitteln 22, 24 und 28 fünf von Null verschiedene Kühlleistungsstufen einstellen, wobei der Gleichstrommotor 12 den mit Null gleichzusetzenden Ausschaltzustand (aus) einnimmt, wenn sich das erste und das dritte Schaltmittel 22 und 28 in der Position 0 befinden. Der Schaltzustand des zweiten Schaltmittels 24 spielt in dieser Stufe keine Rolle und ist daher mit einem * bezeichnet.

Tabelle 1

| Kühlleistung | 22 | 24 | 28 | resultierender Widerstandswert |
|---|---|---|---|---|
| aus | 0 | * | 0 | - |
| gering | 1 | 0 | 0 | $R_1 + R_2$ |
| mittel 1 | 1 | 1 | 0 | $R_1$ |
| mittel 2 | 0 | 1 | 1 | $R_2$ |
| mittel 3 | 1 | 1 | 1 | $R_1 \| \| R_2$ |
| hoch | * | 0 | 1 | 0 |

Eine geringe Kühlleistung (gering) ergibt sich, wenn das erste Schaltmittel 22 in Position 1 geschaltet wird und das zweite und dritte Schaltmittel sich jeweils in der Position 0 befinden. Diese Schalterstellung bewirkt eine Reihenschaltung der beiden Widerstände 18 und 20, so dass sich ein resultierender Widerstandswert $R_1 + R_2$ ergibt, der einen verhältnismäßig hohen Spannungsabfall über der Reihenschaltung bewirkt. Eine erste mittlere Kühlleistung (mittel 1) folgt aus den Positionen 1 des ersten Schaltmittels 22, 1 des zweiten Schaltmittels 24 und 0 des dritten Schaltmittels 28. In diesem Fall sieht der Gleichstrommotor 12 lediglich den Widerstandswert $R_1$ des ersten Widerstands 18. Werden dagegen das erste Schaltmittel 22 auf Position 0 und die beiden übrigen Schaltmittel 24 und 28 jeweils auf Position 1 gesetzt, so ergibt sich eine zweite mittlere Kühlleistung (mittel 2) mit einem resultierenden Widerstandswert $R_2$. Eine dritte mittlere Kühlleistung (mittel 3) ist einstellbar, wenn sich alle drei Schaltmittel 22, 24 und 28 jeweils in ihrer Position 1 befinden, so dass sich eine Parallelschaltung der beiden Widerstände 18 und 20 mit einem resultierenden Widerstandswert $R_1 \| \| R_2 = R_1 \cdot R_2/(R_1 + R_2)$ ergibt. Befinden sich schließlich das zweite Schaltmittel 24 auf Position 0 und das dritte Schaltmittel 28 auf Position 1, so sind beide Widerstände 18 und 20 überbrückt und der Gleichstrommotor 12 läuft mit der höchsten Drehzahl, was wiederum eine hohe Kühlleistung zur Folge hat. Die Schalterstellung des ersten Schaltmittels 22 ist in diesem Fall redundant und daher mit einem * gekennzeichnet.

Figur 2 zeigt ein Kennlinienfeld der Drehzahl rpm des Gleichstrommotors 12 und des von ihm angetriebenen, jedoch nicht gezeigten Lüfters des Kühlgebläses in Abhängigkeit von einem Drehmoment T. Unter Bezugnahme auf Tabelle 1 sind zum Einen die Kennlinien des Gleichstrommotors 12 für die Stufen mit hoher Kühlleistung 34, mit dritter mittlerer Kühlleistung 36, mit zweiter mittlerer Kühlleistung 38, mit erster mittlerer Kühlleistung 40 und mit geringer Kühlleistung 42 dargestellt. Zum Anderen zeigt Figur 2 eine nichtlineare Kennlinie 44 des vom Gleichstrommotor 12 angetriebenen Lüfters. Von Interesse sind nun die Schnittpunkte der Kennlinie 44 mit den Kennlinien 34, 36, 38, 40 und 42. So stellt sich beispielsweise bei hoher Kühlleistung gemäß dem Schnittpunkt der Kennlinien 34 und 44 ein Drehmoment T von ca. 20% bei einer Drehzahl rpm des Gleichstrommotors 12 von 100% ein, während sich bei geringer Kühlleistung gemäß dem Schnittpunkt der Kennlinien 42 und 44 ein Drehmoment T von ca. 8% bei einer Drehzahl rpm von ca. 63% ergibt.

Das Ziel ist es nun, die Abstufung zwischen den einzelnen Schnittpunkten der Kennlinien möglichst gleichmäßig zu gestalten. Dies ist genau dann gewährleistet, wenn ein erster Quotient

$$Q_1 = \frac{R_1}{R_1 + R_2},$$

der sich aus den Widerstandswerten $R_1$ und $R_2$ ergibt, in einem Bereich von ca. 50% bis 100% liegt, wobei die gleichmäßigste Abstufung für $Q_1 \approx 62\%$ gefunden wurde. Dies ist aber auch von den gewählten Widerstandswerten $R_1$ und $R_2$ abhängig. So kann zwar durch einen möglichst hohen Widerstandswert $R_1 + R_2$ der Einschaltstrom deutlich reduziert werden, jedoch hat dieser Widerstandswert auch unmittelbaren Einfluss auf den Drehzahlbereich des Gleichstrommotors 12, der unter Berücksichtigung eines vom Motorwiderstandswert $R_m$ abhängigen zweiten Quotienten

$$Q_2 = \frac{R_1 + R_2}{R_m}$$

in weiten Grenzen variiert werden kann. Der zweite Quotient $Q_2$ sollte in einem Bereich von 1 bis 10 gewählt werden.

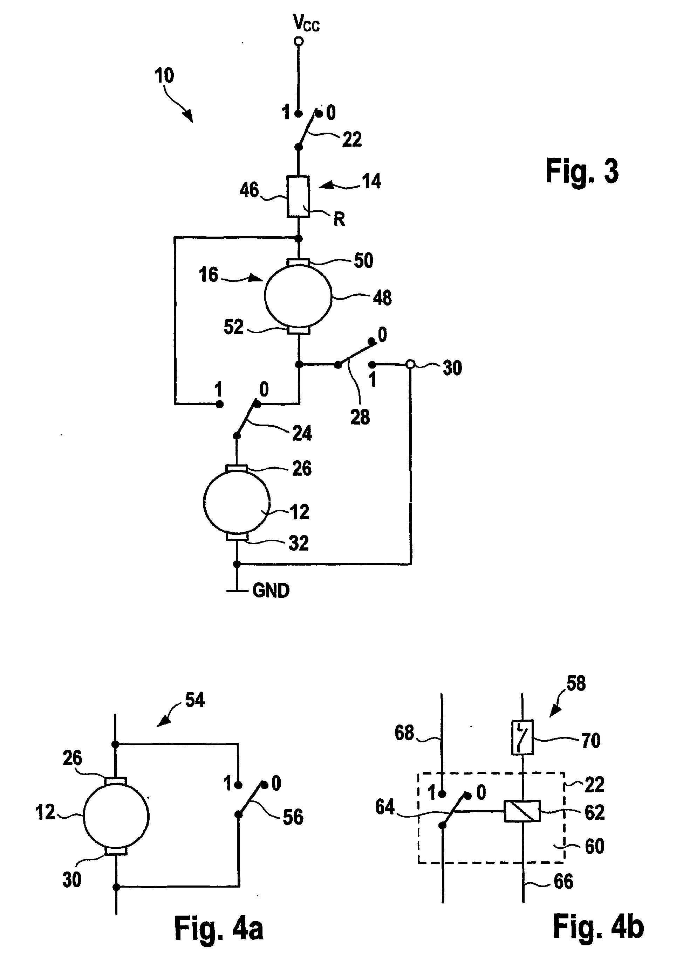

In Figur 3 ist das Blockschaltbild eines zweiten Ausführungsbeispiels der erfindungsgemäßen Vorrichtung 10 zur stufenweisen Ansteuerung zumindest eines ersten Gleichstrommotors 12 für ein Kühlgebläse eines Kraftfahrzeugs dargestellt, wobei nun das erste strombegrenzende Bauelement 14 ein Widerstand 46 mit einem Widerstandswert R und das zweite strombegrenzende Bauelement 16 ein zweiter Gleichstrommotor 48 mit einem ersten und einem zweiten Kontakt 50 bzw. 52 ist. Im Unterschied zum ersten Ausführungsbeispiel ist nun der Knotenpunkt 30 nicht mehr mit der Versorgungsspannung $V_{cc}$ sondern mit dem zweiten Kontakt 32 des ersten Gleichstrommotors 12 verbunden. Das zweite Ausführungsbeispiel zeigt, dass es mit dem Austausch weniger Bauelemente sowie einer kleinen schaltungstechnischen Modifikation möglich ist, die Vorrichtung 10 gemäß dem ersten Ausführungsbeispiel beispielsweise auch für ein Doppelkühlgebläse eines Kraftfahrzeugs einzusetzen.

Die Vorrichtung 10 ist nun derart ausgebildet, dass der erste Kontakt 26 des ersten Gleichstrommotors 12 mittels des ersten und des zweiten Schaltmittels 22 und 24 über den Widerstand 46 an die Versorgungsspannung $V_{cc}$ schaltbar ist. Weiterhin lässt sich der erste Kontakt 26 des ersten Gleichstrommotors 12 mittels des zweiten und des dritten Schaltmittels 24 bzw. 28 an den zweiten Kontakt 32 des ersten Gleichstrommotors 12 schalten. Darüber hinaus sind der erste Kontakt 50 des zweiten Gleichstrommotors 48 mittels des ersten Schaltmittels 22 über den Widerstand 46 an die Versorgungsspannung $V_{cc}$ und der zweite Kontakt 52 des zweiten Gleichstrommotors 48 mittels des dritten Schaltmittels 28 an den zweiten Kontakt 32 des ersten Gleichstrommotors 12 schaltbar. Schließlich ist es möglich, den ersten und den zweiten Gleichstrommotor 12 und 48 mittels des zweiten und des dritten Schaltmittels 24 bzw. 28 wahlweise in einer Reihen- oder Parallelschaltung zu betreiben.

Der Widerstand 46 kann beispielsweise einen sehr kleinen Widerstandswert R aufweisen und als Shunt zur Strommessung verwendet werden. Ebenso kann R aber auch einen Wert von nahezu Null Ohm aufweisen, so dass das erste Bauelement 14 einer Brücke entspricht.

In der nachfolgenden Tabelle 2 sind die mit der Vorrichtung 10 gemäß dem zweiten Ausführungsbeispiel erzielbaren Stufen für die Kühlleistung des Doppelgebläses aufgezeigt. Danach ergibt sich der Ausschaltzustand (aus) des Doppelgebläses, wenn das erste Schaltmittel 22 auf die Position 0 (geöffnet) geschaltet ist. Die Positionen der beiden übrigen Schaltmittel 24 und 28 sind in diesem Fall redundant und daher mit einem * gekennzeichnet. Das Doppelgebläse wird in Betrieb gesetzt durch Verbringen des ersten Schaltmittels 22 in die Position 1 (geschlossen), wobei nun vier von Null verschiedene Stufen in Abhängigkeit der Positionen des zweiten und des dritten Schaltmittels 24 bzw. 28 schaltbar sind.

Tabelle 2

| Kühlleistung | 22 | 24 | 28 | Gleichstrommotor |
|---|---|---|---|---|
| aus | 0 | * | * | - |
| mittel 1 | 1 | 0 | 1 | nur 48 |
| mittel 2 | 1 | 1 | 0 | nur 12 |

(fortgesetzt)

| Kühlleistung | 22 | 24 | 28 | Gleichstrommotor |
|---|---|---|---|---|
| mittel 3 | 1 | 0 | 0 | 12 und 48 in Reihe |
| hoch | 1 | 1 | 1 | 12 und 48 parallel |

Eine erste mittlere Kühlleistung (mittel 1) lässt sich zum Beispiel durch Position 0 des zweiten Schaltmittels 24 und Position 1 des dritten Schaltmittels 28 erreichen. Dies hat zur Folge, dass nur der zweite Gleichstrommotor 48 in Betrieb ist. Bringt man dagegen das zweite Schaltmittel 24 in Position 1 und das dritte Schaltmittel 28 in Position 0, so läuft nur der erste Gleichstrommotor 12, was zu einer zweiten mittleren Kühlleistung (mittel 2) führt. Eine dritte mittlere Kühlleistung (mittel 3) resultiert aus dem Schalten des zweiten und des dritten Schaltmittels 24 und 28 jeweils in ihre Position 0, da nun beide Gleichstrommotoren 12 und 48 in einer Reihenschaltung betrieben werden. Verbringt man schließlich jeweils das zweite und das dritte Schaltmittel 24 bzw. 48 in ihre Position 1, so arbeiten beide Gleichstrommotoren 12 und 48 in einer Parallelschaltung und bewirken eine hohe Kühlleistung (hoch).

In Figur 4a ist das Blockschaltbild einer Bremsschaltung 54 für den ersten Gleichstrommotor 12 gezeigt. Dazu ist es möglich, mittels eines weiteren Schaltmittels 56 den ersten und den zweiten Kontakt 26 bzw. 30 des Gleichstrommotors 12 kurzzuschließen, indem das Schaltmittel 12 unmittelbar nach dem Verbringen der Vorrichtung 10 in ihren Ausschaltzustand von seiner Ruheposition 0 in eine Position 1 geschlossen wird. Für den ersten Gleichstrommotor 12 im zweiten Ausführungsbeispiel gemäß Figur 3 ist im Grunde genommen keine Bremsschaltung 56 erforderlich, da diese Funktion auch von dem zweiten und dem dritten Schaltmittel 24 und 28 übernommen werden kann. So wird der erste Gleichstrommotor 12 kurzgeschlossen, wenn sich das zweite Schaltmittel 24 in der Position 0 und das dritte Schaltmittel 28 in der Position 1 befinden. Andererseits ist die Bremsschaltung 54 in der nach Figur 4a beschriebenen Weise auch für den zweiten Gleichstrommotor 48 einsetzbar.

Figur 4b stellt schließlich eine Schutzbeschaltung 58 für zumindest eines der Schaltmittel - beispielsweise das erste Schaltmittel 22 - gegen einen Überstrom, der zu einer Beschädigung der Gleichstrommotoren 12 und/oder 48 führen kann, dar. Das Schaltmittel 22 ist ausgeführt als ein Relais 60 mit einer Relaisspule 62 und einem Schaltkontakt 64, wobei sich die Relaisspule 62 in einem Steuerkreis 66 und der Schaltkontakt 64 in einem Lastkreis 68 befinden. Im Steuerkreis 66 ist ein thermisches Schutzelement 70 angeordnet, das bei thermischer Überlastung den Steuerkreis 66 unterbricht und so eine Beschädigung der Gleichstrommotoren 12 und/oder 48 verhindert. Alternativ kann das thermische Schutzelement 70 auch im Lastkreis 68 angeordnet sein, um diesen direkt zu unterbrechen. Dies ist beispielsweise sinnvoll, wenn als Schaltmittel statt oder zusätzlich zu den Relais FeldeffektTransistoren, MOSFET oder Bipolar-Transistoren zum Einsatz kommen.

Es sei abschließend noch darauf hingewiesen, dass die gezeigten Ausführungsbeispiele weder auf die Figuren 1 bis 4 noch auf eine direkte Beschaltung der Vorrichtung 10 mit der Versorgungsspannung $V_{cc}$ oder der elektrischen Masse GND beschränkt ist. So können beispielsweise zwischen der elektrischen Masse GND und dem zweiten Kontakt 32 des ersten Gleichstrommotors 12 bzw. zwischen der Versorgungsspannung $V_{cc}$ und dem ersten Schaltmittel 22 ein Shunt zur Strommessung oder andere elektrische Bauelemente angeordnet sein.

**Patentansprüche**

1. Vorrichtung (10) zur stufenweisen Ansteuerung zumindest eines ersten Gleichstrommotors (12) für ein Kühlgebläse eines Kraftfahrzeugs mit einem ersten (14) und einem zweiten strombegrenzenden Bauelement (16) sowie mit einem ersten (22), einem zweiten (24) und einem dritten Schaltmittel (28), **dadurch gekennzeichnet, dass** die Schaltmittel (22, 24, 28) das erste (14) und das zweite strombegrenzende Bauelement (16) derart beschalten, dass eine Kühlleistung des Kühlgebläses in mindestens vier von Null verschiedenen Stufen variierbar ist, wobei das erste und das dritte Schaltmittel (22, 28) als ein Aus-/Einschalter und das zweite Schaltmittel (24) als ein Umschalter mit jeweils einer ersten Schalterstellung (0) und einer zweiten Schalterstellung (1) ausgebildet sind.

2. Vorrichtung nach Anspruch 1, **dadurch gekennzeichnet, dass** das erste (14) und das zweite strombegrenzende Bauelement (16) wahlweise jeweils einzeln oder in einer Reihenschaltung oder in eine Parallelschaltung betreibbar sind.

3. Vorrichtung nach Anspruch 1 oder 2, **dadurch gekennzeichnet, dass**

- das erste strombegrenzende Bauelement (14) mittels des ersten Schaltmittels (22) an eine Versorgungsspannung ($V_{cc}$) und mittels des zweiten Schaltmittels (24) an einen ersten Kontakt (26) des Gleichstrommotors (12) schaltbar ist,

- das zweite strombegrenzende Bauelement (16) mittels des dritten Schaltmittels (28) an die Versorgungsspannung ($V_{cc}$) und mittels des zweiten Schaltmittels (24) an den ersten Kontakt (26) des Gleichstrommotors (12) schaltbar ist,

- das erste (14) und das zweite strombegrenzende Bauelement (16) mittels des ersten (22) und des dritten Schaltmittels (28) in einer Parallelschaltung an die Versorgungsspannung ($V_{cc}$) und mittels des zweiten Schaltmittels (24) an den ersten Kontakt (26) des Gleichstrommotors (12) schaltbar sind und

- das erste (14) und das zweite strombegrenzende Bauelement (16) mittels des ersten (22) und des zweiten Schaltmittels (24) in einer Reihenschaltung an die Versorgungsspannung ($V_{cc}$) und an den ersten Kontakt (26) des Gleichstrommotors (12) schaltbar sind.

4. Vorrichtung nach einem der vorhergehenden Ansprüche, **dadurch gekennzeichnet, dass** das erste strombegrenzende Bauelement (14) ein erster Widerstand (18) und das zweite strombegrenzende Bauelement (16) ein zweiter Widerstand (20) ist.

5. Vorrichtung nach Anspruch 4, **dadurch gekennzeichnet, dass** der erste Widerstand (18) einen ersten Widerstandswert $R_1$ und der zweite Widerstand (20) einen zweiten Widerstandswert $R_2$ aufweist und dass ein aus dem ersten Widerstandswert $R_1$ und dem zweiten Wiederstandswert $R_2$ berechneter erster Quotient

$$Q_1 = \frac{R_1}{R_1 + R_2}$$

in etwa in einem Bereich von 50% bis 100% liegt.

6. Vorrichtung nach Anspruch 5, **dadurch gekennzeichnet, dass** der erste Quotient $Q_1$ in etwa den Wert 62% annimmt.

7. Vorrichtung nach Anspruch 4, **dadurch gekennzeichnet, dass** der zumindest eine Gleichstrommotor (12) einen Motorwiderstandswert $R_m$ aufweist und dass ein aus dem ersten Widerstandswert $R_1$, dem zweiten Widerstandswert $R_2$ und dem Motorwiderstandswert $R_m$ berechneter, zweiter Quotient

$$Q_2 = \frac{R_1 + R_2}{R_m}$$

in etwa in einem Bereich von 1 bis 10 liegt.

8. Vorrichtung nach Anspruch 1, **dadurch gekennzeichnet, dass** das erste strombegrenzende Bauelement (14) ein Widerstand (46) und das zweite strombegrenzende Bauelement (16) ein zweiter Gleichstrommotor (48) ist.

9. Vorrichtung nach Anspruch 8, **dadurch gekennzeichnet, dass** der erste (12) und der zweite Gleichstrommotor (48) wahlweise jeweils einzeln oder in einer Reihenschaltung oder in einer Parallelschaltung betreibbar sind.

10. Vorrichtung nach Anspruch 8 oder 9, **dadurch gekennzeichnet, dass**

- ein erster Kontakt (26) des ersten Gleichstrommotors (12) mittels des ersten (22) und des zweiten Schaltmittels (24) über den Widerstand (46) an eine Versorgungsspannung ($V_{cc}$) schaltbar ist,

- der erste Kontakt (26) des ersten Gleichstrommotors (12) mittels des zweiten (24) und des dritten Schaltmittels (28) an einen zweiten Kontakt (32) des ersten Gleichstrommotors (12) schaltbar ist,

- ein erster Kontakt (50) des zweiten Gleichstrommotors (48) mittels des ersten Schaltmittels (22) über den Widerstand (46) an die Versorgungsspannung ($V_{cc}$) und ein zweiter Kontakt (52) des zweiten Gleichstrommotors (48) mittels des dritten Schaltmittels (28) an den zweiten Kontakt (32) des ersten Gleichstrommotors (12) schaltbar ist,

- der erste (12) und der zweite Gleichstrommotor (48) mittels des zweiten (24) und des dritten Schaltmittels (28) wahlweise in einer Reihen- oder Parallelschaltung schaltbar sind.

**11.** Vorrichtung nach einem der vorhergehenden Ansprüche 8 bis 10, **dadurch gekennzeichnet, dass** der Widerstand (46) einen Widerstandswert R ≈ 0 Ohm besitzt.

**12.** Vorrichtung nach einem der vorhergehenden Ansprüche, **dadurch gekennzeichnet, dass** mindestens einem Schaltmittel (22, 24, 28) jeweils ein thermisches Schutzelement (70) zugeordnet ist.

**13.** Vorrichtung nach einem der vorhergehenden Ansprüche, **dadurch gekennzeichnet, dass** die Schaltmittel (22, 24, 28) als Relais (60) und/oder MOSFET und/oder FET und/oder Bipolar-Transistoren ausgeführt sind.

**14.** Vorrichtung nach einem der vorhergehenden Ansprüche, **dadurch gekennzeichnet, dass** dem mindestens einen Gleichstrommotor (12, 48) ein viertes Schaltmittel (56) parallel geschaltet ist.

**Claims**

**1.** Apparatus (10) for driving, in stages, at least one first DC motor (12) for a cooling fan of a motor vehicle, having a first (14) and a second current-limiting component (16) and having a first (22), a second (24) and a third switching means (28), **characterized in that** the switching means (22, 24, 28) interconnect the first (14) and the second current-limiting component (16) in such a way that a cooling power of the cooling fan can be varied in at least four stages which are different from zero, with the first and the third switching means (22, 28) being in the form of an off/on switch and the second switching means (24) being in the form of a changeover switch with in each case a first switch position (0) and a second switch position (1).

**2.** Apparatus according to Claim 1, **characterized in that** the first (14) and the second current-limiting component (16) can selectively be operated in each case individually or in a series circuit or in a parallel circuit.

**3.** Apparatus according to Claim 1 or 2, **characterized in that**

- the first current-limiting component (14) can be connected to a supply voltage ($V_{cc}$) by means of the first switching means (22) and can be connected to a first contact (26) of the DC motor (12) by means of the second switching means (24),
- the second current-limiting component (16) can be connected to the supply voltage ($V_{cc}$) by means of the third switching means (28) and can be connected to the first contact (26) of the DC motor (12) by means of the second switching means (24),
- the first (14) and the second current-limiting component (16) can be connected to the supply voltage ($V_{cc}$) by means of the first (22) and the third switching means (28) in a parallel circuit and can be connected to the first contact (26) of the DC motor (12) by means of the second switching means (24), and
- the first (14) and the second current-limiting component (16) can be connected to the supply voltage ($V_{cc}$) and to the first contact (26) of the DC motor (12) by means of the first (22) and the second switching means (24) in a series circuit.

**4.** Apparatus according to one of the preceding claims, **characterized in that** the first current-limiting component (14) is a first resistor (18) and the second current-limiting component (16) is a second resistor (20).

**5.** Apparatus according to Claim 4, **characterized in that** the first resistor (18) has a first resistance value $R_1$ and the second resistor (20) has a second resistance value $R_2$, and **in that** a first quotient

$$Q_1 = \frac{R_1}{R_1 + R_2} \, ,$$

which is calculated from the first resistance value $R_1$ and the second resistance value $R_2$, is approximately in a range of from 50% to 100%.

6. Apparatus according to Claim 5, **characterized in that** the first quotient $Q_1$ assumes the approximate value of 62%.

7. Apparatus according to Claim 4, **characterized in that** the at least one DC motor (12) has a motor resistance value $R_m$, and **in that** a second quotient

$$Q_2 = \frac{R_1 + R_2}{R_m} ,$$

which is calculated from the first resistance value $R_1$, the second resistance value $R_2$ and the motor resistance value $R_m$, is approximately in a range of from 1 to 10.

8. Apparatus according to Claim 1, **characterized in that** the first current-limiting component (14) is a resistor (46) and the second current-limiting component (16) is a second DC motor (48).

9. Apparatus according to Claim 8, **characterized in that** the first (12) and the second DC motor (48) can selectively be operated in each case individually or in a series circuit or in a parallel circuit.

10. Apparatus according to Claim 8 or 9, **characterized in that**

   - a first contact (26) of the first DC motor (12) can be connected to a supply voltage ($V_{cc}$) via the resistor (46) by means of the first (22) and the second switching means (24),
   - the first contact (26) of the first DC motor (12) can be connected to a second contact (32) of the first DC motor (12) by means of the second (24) and the third switching means (28),
   - a first contact (50) of the second DC motor (48) can be connected to the supply voltage ($V_{cc}$) via the resistor (46) by means of the first switching means (22), and a second contact (52) of the second DC motor (48) can be connected to the second contact (32) of the first DC motor (12) by means of the third switching means (28),
   - the first (12) and the second DC motor (148) can selectively be connected in a series or parallel circuit by means of the second (24) and the third switching means (28).

11. Apparatus according to one of the preceding Claims 8 to 10, **characterized in that** the resistor (46) has a resistance value of R ≈ 0 ohm.

12. Apparatus according to one of the preceding claims, **characterized in that** at least one switching means (22, 24, 28) in each case has an associated thermal protection element (70).

13. Apparatus according to one of the preceding claims, **characterized in that** the switching means (22, 24, 28) are designed as relays (60) and/or MOSFET and/or FET and/or bipolar transistors.

14. Apparatus according to one of the preceding claims, **characterized in that** a fourth switching means (56) is connected in parallel with the at least one DC motor (12, 48).

**Revendications**

1. Dispositif (10) de commande progressive d'au moins un premier moteur à courant continu (12) pour un ventilateur de refroidissement d'un véhicule automobile comprenant un premier (14) et un deuxième (16) composant limiteur de courant ainsi qu'un premier (22), un deuxième (24) et un troisième (28) moyen de commutation, **caractérisé en ce que** les moyens de commutation (22, 24, 28) connectent le premier (14) et le deuxième (16) composant limiteur de courant de telle sorte qu'une puissance de refroidissement du ventilateur de refroidissement peut être variée sur au moins quatre niveaux différents de zéro, le premier et le troisième moyens de commutation (22, 28) étant réalisés sous la forme d'un commutateur Marche/Arrêt et le deuxième moyen de commutation (24) sous la forme d'un inverseur ayant respectivement une première position de commutation (0) et une deuxième position de commutation (1).

2. Dispositif selon la revendication 1, **caractérisé en ce que** le premier (14) et le deuxième (16) composant limiteur de courant peuvent être utilisés, au choix, à chaque fois individuellement ou branchés en série ou branchés en parallèle.

3. Dispositif selon la revendication 1 ou 2, **caractérisé en ce que**

- le premier composant limiteur de courant (14) peut être connecté à une tension d'alimentation ($V_{cc}$) au moyen du premier moyen de commutation (22) et à un premier contact (26) du moteur à courant continu (12) au moyen du deuxième moyen de commutation (24),
- le deuxième composant limiteur de courant (16) peut être connecté à la tension d'alimentation ($V_{cc}$) au moyen du troisième moyen de commutation (28) et au premier contact (26) du moteur à courant continu (12) au moyen du deuxième moyen de commutation (24),
- le premier (14) et le deuxième (16) composant limiteur de courant peuvent être connectés à la tension d'alimentation ($V_{cc}$) en un circuit parallèle au moyen du premier (22) et du troisième (28) moyen de commutation et au premier contact (26) du moteur à courant continu (12) au moyen du deuxième moyen de commutation (24) et
- le premier (14) et le deuxième (16) composant limiteur de courant peuvent être connectés à la tension d'alimentation ($V_{cc}$) et au premier contact (26) du moteur à courant continu (12) en un circuit série au moyen du premier (22) et du deuxième moyen de commutation (24).

4. Dispositif selon l'une des revendications précédentes, **caractérisé en ce que** le premier composant limiteur de courant (14) est une première résistance (18) et le deuxième composant limiteur de courant (16) est une deuxième résistance (20).

5. Dispositif selon la revendication 4, **caractérisé en ce que** la première résistance (18) présente une première valeur de résistance $R_1$ et la deuxième résistance (20) présente une deuxième valeur de résistance $R_2$ et **en ce qu'**un premier quotient

$$Q_1 = \frac{R_1}{R_1 + R_2}$$

calculé à partir de la première valeur de résistance $R_1$ et de la deuxième valeur de résistance $R_2$ se trouve approximativement dans une plage de 50 % à 100 %.

6. Dispositif selon la revendication 5, **caractérisé en ce que** le premier quotient $Q_1$ prend approximativement la valeur de 62 %.

7. Dispositif selon la revendication 4, **caractérisé en ce que** l'au moins un moteur à courant continu (12) présente une valeur de résistance de moteur $R_m$ et **en ce qu'**un deuxième quotient

$$Q_z = \frac{R_1 + R_2}{R_m}$$

calculé à partir de la première valeur de résistance $R_1$, de la deuxième valeur de résistance $R_2$ et de la valeur de résistance de moteur $R_m$ se trouve approximativement dans une plage de 1 à 10.

8. Dispositif selon la revendication 1, **caractérisé en ce que** le premier composant limiteur de courant (14) est une résistance (46) et le deuxième composant limiteur de courant (16) est un deuxième moteur à courant continu (48).

9. Dispositif selon la revendication 8, **caractérisé en ce que** le premier (12) et le deuxième (48) moteur à courant continu peuvent être utilisés, au choix, à chaque fois individuellement ou branchés en série ou branchés en parallèle.

10. Dispositif selon la revendication 8 ou 9, **caractérisé en ce que**

- un premier contact (26) du premier moteur à courant continu (12) peut être connecté à une tension d'alimentation ($V_{cc}$) par le biais de la résistance (46) au moyen du premier (22) et du deuxième (24) moyen de commutation,
- le deuxième contact (26) du premier moteur à courant continu (12) peut être connecté à un deuxième contact (32) du premier moteur à courant continu (12) au moyen du deuxième (24) et du troisième (28) moyen de commutation,

- un premier contact (50) du deuxième moteur à courant continu (48) peut être connecté à la tension d'alimentation ($V_{cc}$) par le biais de la résistance (46) au moyen du premier moyen de commutation (22) et un deuxième contact (52) du deuxième moteur à courant continu (48) peut être connecté au deuxième contact (32) du premier moteur à courant continu (12) au moyen du troisième moyen de commutation (28),

- le premier (12) et le deuxième (48) moteur à courant continu peuvent être branchés, au choix, en un circuit série ou parallèle au moyen du deuxième (24) et du troisième moyen de commutation (28).

**11.** Dispositif selon l'une des revendications précédentes 8 à 10, **caractérisé en ce que** la résistance (46) possède une valeur de résistance R - 0 ohm.

**12.** Dispositif selon l'une des revendications précédentes, **caractérisé en ce qu'**un élément de protection thermique (70) est à chaque fois associé à au moins un moyen de commutation (22, 24, 28).

**13.** Dispositif selon l'une des revendications précédentes, **caractérisé en ce que** les moyens de commutation (22, 24, 28) sont réalisés sous la forme de relais (60) et/ou de MOSFET et/ou de FET et/ou de transistors bipolaires.

**14.** Dispositif selon l'une des revendications précédentes, **caractérisé en ce qu'**un quatrième moyen de commutation (56) est branché en parallèle avec l'au moins un moteur à courant continu (12, 48).

# Fig. 1

# Fig. 2

**Fig. 3**

**Fig. 4a**

**Fig. 4b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1017158 A2
- EP 0445015 A1
- EP 518538 A2
- EP 1375326 A2